(19) Europäisches Patentamt
European Patent Office
Office européen des brevets

(11) **EP 4 129 561 A1**

(12) **EUROPEAN PATENT APPLICATION**
published in accordance with Art. 153(4) EPC

(43) Date of publication:
**08.02.2023 Bulletin 2023/06**

(21) Application number: **21780355.0**

(22) Date of filing: **26.03.2021**

(51) International Patent Classification (IPC):
**B23K 26/36** (2000.01)    **B23K 26/082** (2014.01)

(52) Cooperative Patent Classification (CPC):
**B23K 26/082; B23K 26/36**

(86) International application number:
**PCT/JP2021/012889**

(87) International publication number:
**WO 2021/200667 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.03.2020 JP 2020062130**

(71) Applicants:
• **Maeda Corporation
Chiyoda-ku,
Tokyo 1028151 (JP)**
• **Toyokoh Co., Ltd.
Fuji-shi, Shizuoka 417-0047 (JP)**

(72) Inventors:
• **SHIRANE, Yuji
Tokyo 102-8151 (JP)**

• **MISAKA, Takehiro
Tokyo 102-8151 (JP)**
• **MARUYAMA, Kenji
Tokyo 102-8151 (JP)**
• **OBARA, Takayuki
Tokyo 102-8151 (JP)**
• **MOMI, Kenjiro
Fuji-shi, Shizuoka 417-0047 (JP)**
• **FUJITA, Kazuhisa
Fuji-shi, Shizuoka 431-1202 (JP)**
• **UTSUGITA, Takahiro
Fuji-shi, Shizuoka 417-0047 (JP)**
• **HARAGUCHI, Manabu
Fuji-shi, Shizuoka 417-0047 (JP)**

(74) Representative: **Banzer, Hans-Jörg
Kraus & Weisert
Patentanwälte PartGmbB
Thomas-Wimmer-Ring 15
80539 München (DE)**

(54) **CONCRETE SURFACE PROCESSING METHOD AND LASER-PROCESSED CONCRETE SURFACE**

(57)    PROBLEM TO BE SOLVED: To provide a surface processing method for concrete in which vitrifying is suppressed even when high-speed processing is performed.

SOLUTION: In a surface processing method of concrete, a surface of the concrete is irradiated with a laser beam so that a beam spot is scanned along a predetermined scanning pattern and the scanning pattern moves along the surface at a predetermined feed speed. When the beam spot repeatedly passes through a predetermined portion in the scanning pattern, an overlap ratio, which is a ratio of overlapping of a passage path of the beam spot over a passage path of the beam spot in an immediately preceding irradiation, is 90% or less.

【FIG.3】

**Description**

TECHNICAL FIELD

The present invention relates to a concrete surface processing (preparation) method for irradiating a surface of concrete with a laser beam to excavate the surface, and a laser-processed concrete surface.

BACKGROUND TECHNOLOGY

In a concrete building, a structure, or the like, a surface layer of concrete may be peeled for the purpose of maintenance such as inspection of an internal structure, formation of under coat for a repair material (mortar, paint, etc.).

Conventionally, as a technique that can be used for such surface roughening (peeling), there has been known a water jet method, for example, in which highly pressurized water is injected from a nozzle so that bindings of concrete is destroyed by water pressure.

Further, in order to break a part of the structure or adjust the shape for repair work or the like, there is known a chipping (breaking up) work to excavate the surface by mechanical force with a pick, a drill, and other machinery or tools

The surface processing by the water jet method described above may be performed until relatively large coarse aggregates (gravel or the like) having a size of about 20 mm is exposed. In recent years, this sort of concrete surface processing has been proposed to be carried out by irradiation with a laser beam.

For example, in Non-Patent Document 1, a pseudo CW laser (QCW) is used to irradiate a concrete surface with a pulsed laser.

In Non-Patent Document 2, it is described that a pulse laser is applied to a concrete surface and fine parts are peeled by thermal shock.

In Patent Document 1, although not related to surface processing of concrete, a wedge prism for deflecting a laser beam by a predetermined angle is provided on an irradiation head for irradiating an irradiation object with a continuous wave (CW) laser beam, and by irradiating the laser beam while rotating the wedge prism, an irradiation spot rotates and scans on a surface of an irradiation object.

PRIOR ART DOCUMENT

PATENT DOCUMENT

Patent Document 1: Japanese Patent Application Laid-Open No. 2002-89033

NON-PATENT DOCUMENT

Non-Patent Document 1:
「Experimental characterization of concrete removal by high-power quasicontinuous wave fiber laser irradiation」 Nguyen Phi Long, Hiroyuki Daido, Tomonori Yamada, Akihiko Nishimura, Noboru Hasegawa, and Tetsuya Kawachi, JOURNAL OF LASER APPLICATIONS VOLUME 29, NUMBER 4, NOVEMBER 2017
Non-patent document 2:
「Efficiency of concrete removal with a pulsed Nd:YAG laser」 Michael Savina, Zhiyue Xu, Yong Wang, Claude Reed, Michael Pellin, Journal of Laser Applications 12, 200 (2000) p.200-204

SUMMARY OF THE INVENTION

PROBLEM TO BE SOLVED BY THE INVENTION

With respect to a technique described in Non-Patent Literature 1, it is a problem that a silicon-based component such as quartz in concrete is melted by irradiation heat, re-solidified, and vitrified.

In the technique described in Non-Patent Document 2, vitrifying is suppressed by irradiating a pulsed laser with a high energy density for a short irradiation time.

However, when the surface processing of concrete by laser light is industrially performed, it is desired to perform processing at high speed.

The present invention has been made in view of the above problems, and an object of the present invention is to provide a surface processing method for concrete and a laser-processed concrete surface in which vitrifying is suppressed even when high-speed processing is performed.

MEANS FOR SOLVING THE PROBLEM

The present invention solves the above-described problems by the following solutions.

According to a 1st aspect of the present invention, there is provided a surface processing (preparation) method of concrete, wherein a surface of the concrete is irradiated with a laser beam so that a beam spot is scanned along a predetermined scanning pattern and the scanning pattern moves along the surface at a predetermined feed speed, and characterized in that, when the beam spot repeatedly passes through a predetermined portion in the scanning pattern, an overlap ratio, which is a ratio of overlapping of a passage path of the beam spot over a passage path of the beam spot in an immediately preceding irradiation, is 90% or less.

Inventors of the present invention have found that, when performing excavation processing such as surface roughening (surface layer peeling) by laser irradiation onto a concrete surface, the overlap ratio, which is a range in which the irradiation range of the beam spot overlaps with the irradiation range before one period of the scanning pattern, is a factor dominant to the presence or absence and the degree of vitrifying.

According to the present invention, by irradiating the surface of the concrete with a predetermined scanning pattern so as the overlap ratio to become 90% or less, it is possible to suppress the occurrence of vitrifying even when high-speed processing is performed, and to obtain a well processed surface.

It should be noted that the overlap ratio is 90% or less here means that an overlap ratio calculated on a basis of at least one of the definitions of the plurality of overlap ratios described in the present specification is 90% or less.

According to a 2nd aspect of the present invention, there is provided a surface processing method of concrete according to the 1st aspect, wherein the beam spot moves on the surface along a predetermined path having a width corresponding to a diameter of the beam spot, and the overlap ratio is a ratio of an overlapping width of the beam spot irradiated in an immediately preceding path and a latest path to the diameter of the beam spot.

According to a 3rd aspect of the present invention, there is provided a surface processing method of concrete according to the 1st aspect, wherein the overlap ratio is a ratio of a diameter of the beam spot to a feed length in one cycle of the scanning pattern according to the feed speed of the scanning pattern.

According to a fourth aspect of the present invention, there is provided a surface processing method of concrete according to the 1st aspect, wherein, when a moving speed of the beam spot on the surface is V, the diameter of the beam spot is d, and an irradiation area during an irradiation time t is S, the overlap ratio is $(1 - (S/ (V \times d \times t)) \times 100$ (%).

According to each of these inventions, the above-described effects can be certainly obtained by appropriately defining the overlap ratio.

According to a fifth aspect of the present invention, there is provided a surface processing method of concrete according to one of aspects 1 to 4, wherein the beam spot moves on the surface at a speed of 6 meters per second or faster.

According to this, since the beam spot moves on the surface at a high speed, when looking at a predetermined one point, it is immediately cooled after receiving the heat input, so that it is possible to prevent the occurrence of vitrifying by suppressing rising of a surface temperature.

According to a sixth aspect of the present invention, there is provided a surface processing method of concrete according to one of aspects 1 to 5, wherein a power density of the beam spot on the surface is no less than 0.53 MW/cm$^2$.

According to this, by providing a heat quantity required for surface roughening of the concrete surface in a short time by a high power density, it is possible to suppress rising of the surface temperature and to prevent the occurrence of vitrifying.

According to a seventh aspect of the present invention, there is provided a surface processing method of concrete, wherein a surface of a concrete is repeatedly irradiated with a laser beam having a power density of no less than 0.53 MW/cm$^2$, with single irradiation time 0.12 msec or less, and with a separated predetermined interval.

According to this, by periodically repeating the irradiation in a short time at a high power density at a predetermined interval, a rise of the surface temperature can be suppressed while excavating the concrete surface, and the glass forming can be prevented.

According to an eighth aspect of the present invention, there is provided a surface processing method for concrete according to 7th aspect, wherein the number of times of irradiation of the repeated irradiation at the same position on the surface is 10 or less.

According to this, it is possible to prevent the occurrence of vitrifying due to repeated irradiation with an excessively large number of times.

According to a ninth aspect of the present invention, there is provided a surface processing method for concrete according to any one of 1st to 8th aspect, wherein the output of the laser oscillator for generating the laser beam is 2 kW or higher.

According to this, it is possible to appropriately form a beam spot having a sufficient energy density for roughening the concrete surface, and to certainly obtain the above-described effect.

According to a tenth aspect of the present invention, there is provided a surface processing method for concrete according to any one of 1st to 9th aspects, wherein a scanning pattern is set such that the beam spot turns along a predetermined shape on the surface.

According to this, by providing a deflection means such as a rotating wedge prism, for example, in an optical system that emits a laser beam, it is possible to form a scanning pattern with a simple configuration.

According to an eleventh aspect of the present invention, there is provided a surface processing method for concrete according to any one of 1st to 9th aspects, wherein a scanning pattern is set such that the beam spot reciprocates in a predetermined interval on the surface.

According to this, by providing a deflection means such as a galvanometer scanner, for example, in an optical system for emitting the laser beam, it is possible to form a scanning pattern with a simple configuration.

According to a twelfth aspect of the present invention, there is provided a laser processed-concrete surface irradiated with a laser beam so that a beam spot is scanned along a predetermined scanning pattern on a surface of concrete and the scanning pattern moves along the surface at a predetermined feed speed, and in at least a part of area, an excavation trace formed when the beam spot repeatedly passes through a predetermined portion in the scanning pattern, is disposed so as to be overlapped with another excavation trace formed immediately before, in a range of 90% or less of the diameter of the beam spot in the feed speed direction of the scanning pattern.

According to a thirteenth aspect of the present invention, there is provided a laser-processed concrete surface according to 12th aspect, wherein a surface area in which re-solidification after melting and vitrifying generated by laser irradiation is 50% or less.

According to a fourteenth aspect of the present invention, there is provided a laser-processed concrete surface according to 12th or 13th aspect, wherein the width of the excavation trace is 0.85 mm or less, and the depth of the excavation trace is 1 mm or less.

In each of these inventions, the same effects as those of the above-described effects of the invention relating to the above-described surface processing method of concrete can be obtained.

EFFECT OF THE INVENTION

As described above, according to the present invention, there is provided a concrete surface processing method and a laser-processed concrete surface that suppresses vitrifying even when high-speed processing is performed.

BRIEF DESCRIPTION OF THE DRAWINGS

FIG. 1 is a cross-sectional view of an irradiation head used in a first embodiment of a surface processing method of concrete to which the present invention is applied.

FIG. 2 is a photograph of a surface after irradiation in the first embodiment.

FIG. 3 is a diagram illustrating an example of tracks of a beam spot in the first embodiment.

FIG. 4 is a schematic diagram showing a concept of an irradiation time in the first embodiment.

FIG. 5 is a diagram showing a correlation between an overlap ratio and a result of evaluation of vitrifying.

FIG. 6 is a diagram schematically showing a difference in surface temperature history according to an overlap ratio.

FIG. 7 is a diagram showing a correlation between an overlap ratio and a power density, and an evaluation result of vitrifying.

FIG. 8 is a diagram illustrating an example of tracks of a beam spot in a second embodiment of the present invention;

FIG. 9 is a diagram illustrating an example of tracks of a beam spot in a third embodiment of the present invention.

MODE FOR CARRYING OUT THE INVENTION

< First Embodiment >

Hereinafter, a first embodiment of a surface processing method of concrete to which the present invention is applied and a laser-processed concrete surface will be described

A laser irradiation device that executes a surface processing method of concrete etc. according to a first embodiment includes an irradiation head 1 that irradiates a concrete irradiation object O with a beam of a laser light R supplied from a laser oscillator via a fiber, and performs excavation and roughening of the surface layer of the concrete by scanning the surface of the irradiation object O along a scanning pattern on an arc.

This processing is performed by turning (rotating) an irradiation position (beam spot BS) on the surface of the irradiation object O along a circular arc having a relatively large diameter of about 10 mm or larger, for example, and excavating the surface of the concrete along a path P through which the beam spot BS passes.

By moving the scanning pattern relatively to the irradiation object O at a predetermined feed speed while continuously performing such irradiation by the CW laser, the surface layer can be peeled by irradiating the entire surface of the irradiation object O with the laser beam R.

On the surface of the laser-processed concrete, for example, defects such as mechanical defects such as cracks, and defects such as chemical modification or physical property deterioration are inspected, and surface portions are re-finished by mortar, paint, etc..

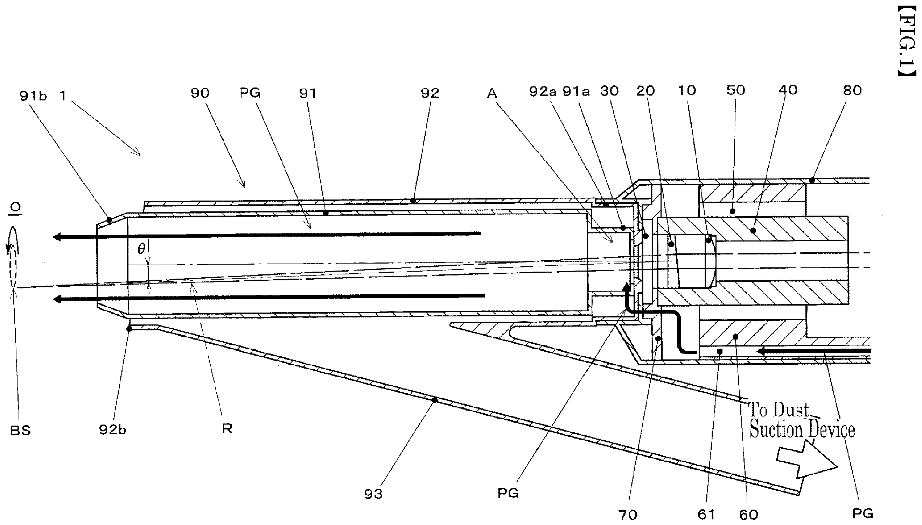

FIG. 1 is a cross-sectional view of an irradiation head in a laser irradiation device according to a first embodiment

The irradiation head 1 irradiates the irradiation object O with a laser beam R of a continuous wave (CW) transmitted from a laser oscillator (not shown) via a fiber (not shown).

The irradiation head 1 is, for example, a handy type capable of performing work while being held by an operator, but can be used by being attached to a robot capable of moving the irradiation head 1 along a predetermined path.

In addition, in a state where the irradiation head 1 is fixed, the irradiation object O may be displaced relative to the irradiation head.

The irradiation head 1 includes a focus lens 10, a wedge prism 20, a protective glass 30, a rotary cylinder 40, a motor 50, a motor holder 60, a protective glass holder 70, a housing 80, a duct 90 etc..

The focus lens 10 is an optical element in which a laser beam R transmitted from a laser oscillator (not shown) to the irradiation head 1 via a fiber enters after passing through a collimator lens (not shown).

The collimator lens is an optical element that converts the laser beam emitted from the end of the fiber into a substantially parallel (collimated) beam.

The focus lens 10 is an optical element for focusing (condensing) the laser beam R emitted by the collimator lens at a predetermined focal position.

As the focus lens 10, for example, a convex lens having positive power can be used.

Note that the beam spot BS, which is an irradiation point on the surface of the irradiation object O by the laser beam R, is arranged on a coincident point of the focal point or in the proximity state within the depth of focus (focusing state), or a state separated from the focal position (defocus state) .

The depth of focus means a range in an optical axis direction in which the beam diameter is less than or equal to a diameter of a predetermined allowable circle of confusion.

The wedge prism 20 is an optical element which deflects the laser beam R emitted from the focus lens 10 by a predetermined deflection angle $\theta$ (see FIG. 1) and makes the optical axis angles of the incident side and the exit side different.

The wedge prism 20 is formed in a plate shape in which the thickness thereof is continuously changed so that one of the thicknesses in the direction perpendicular to the optical axis direction of the incident side becomes larger than the thickness of the other.

The protective glass 30 is an optical element made of a flat plate-shaped glass or the like which is disposed close to the wedge prism 20 in the focus position side (the irradiation object O side and the beam spot BS side) along the optical axis direction.

The protective glass 30 is a protective member which prevents foreign matter, such as a peeled material, dust, or the like, scattered from the irradiation object O side, from adhering to other optical elements such as the wedge prism 20.

The protective glass 30 is an optical element disposed closest to the focal point position along the optical axis direction of the optical system of the irradiation head 1, and is exposed to the irradiation object O side via a space portion A and an interior of the duct 90, which will be described later.

The focus lens 10, the wedge prism 20, and the protective glass 30 are formed by coating a surface of a member made of a transparent material such as an optical glass, for example, with a coating for preventing reflection and surface protection.

The rotary cylinder 40 is a cylindrical member that holds the focus lens 10 and the wedge prism 20 on the inner diameter side.

The rotary cylinder 40 is formed concentrically with an optical axis of the focus lens 10 and an optical axis of the laser beam R (an optical axis of the collimator lens) which enters to the focus lens 10.

The rotary cylinder 40 is rotatably supported by a bearing (not shown), with respect to the housing 80, around a rotation center axis coinciding with an optical axis of the focus lens 10.

The rotary cylinder 40 is made of a metal such as an aluminum alloy or an engineering plastic.

The motor 50 is an electric actuator which rotationally drives the rotary cylinder 40 around a rotation center axis with respect to the housing 80.

The motor 50 is configured, for example, as an annular motor that is concentric with the rotary cylinder 40 and is provided on an outer diameter side of the rotary cylinder 40.

A stator (not shown) of the motor 50 is fixed to the housing 80 via a motor holder 60.

A rotor (not shown) of the motor 50 is fixed to the rotary cylinder 40.

The motor 50 is controlled by a motor drive unit (not shown) so that the rotational speed of the rotary cylinder 40 substantially coincides with a desired target rotational speed.

To maintain a posture of an irradiation head 1 so that a rotation center axis of a rotary cylinder 40 is orthogonal to a surface near an irradiation part of an irradiation object O, and the motor 50 rotates a wedge prism 20 together with a rotary cylinder 40. Thus the beam spot BS is circularly scanned along the surface of the irradiation object O in an arc shape around the rotation center axis of the rotary cylinder 40.

When the irradiation head 1 is moved translationally along the surface of the irradiation object O in this state, the beam spot BS scans the surface of the object O while rotating in an arc shape.

Thus, when attention is paid to an arbitrary point on the irradiation object O, the laser beam R is incident in a pulse form only for a short time, and rapid heating and rapid cooling sequentially occur in a short time.

At this time, a surface layer of the irradiation object O is crushed, excavated and scattered.

The motor holder 60 is a support member that holds the stator of the motor 50 in a predetermined position inside the housing 80.

The main body of the motor holder 60 is formed in a cylindrical shape and is fixed to the housing 80 in a state of being inserted into the inner diameter side of the housing 80.

An inner peripheral surface of the motor holder 60 is disposed facing an outer peripheral surface of the motor 50 and is fixed to a stator of the motor 50.

A purge gas channel 61 through which a purge gas PG flows is formed in a portion between an outer peripheral surface and an inner peripheral surface of the motor holder 60.

The purge gas PG is a gas that is ejected from the space A in contact with the irradiation object O side surface of the protective glass 30, in the inner cylinder 91 of the duct 90 when the irradiation head 1 is used (during irradiation). A surface portion of the protective glass 30 on the irradiation object O side is disposed so as to be exposed inside the space portion A.

The purge gas PG has a function of preventing dust and foreign substances, such as fragments of excavated surface layer, which scatters from the irradiation object O side, from flying into the housing 80 and adhering to the protective glass 30.

The purge gas channel 61 is an opening formed through a portion of the motor holder 60 in an axial direction of the motor 50.

The purge gas PG discharged from the purge gas channel 61 is introduced into the inner diameter side of the inner cylinder 91 of the duct 90 via a channel provided in the housing 80.

The protective glass holder 70 is a member fixed to the inner diameter side of the housing 80 while holding the protective glass 30.

The protective glass holder 70 is formed in a disk shape, for example, in which a circular opening is formed in a central portion.

The laser beam R passes through an aperture from the wedge prism 20 side toward the irradiation object O side.

A recessed portion into which a protective glass 30 is fitted is formed on a surface portion of the protective glass holder 70 on the irradiation object O side.

The protective glass 30 is held inside the housing 80 in a state in which it is fitted into this recess.

The protective glass 30 is detachably attached to the protective glass holder 70 so as to be replaceable when contamination or burnout occurs.

A surface portion of the protective glass holder 70 on the side opposite to the irradiation object O side is opposed to an end surface of the motor holder 60 on the irradiation object O side with a space.

This space constitutes a part of a flow path (a part of the fluid supply unit) which introduces the purge gas PG introduced from the purge gas flow path 61 of the motor holder 60 into the space portion A on the irradiation object O side of the protective glass 30.

The housing 80 is a cylindrical member constituting a casing of the main body of the irradiation head 1.

In the inside of the housing 80, the focus lens 10, the wedge prism 20, the protective glass 30, the rotary cylinder 40, the motor 50, the motor holder 60, the protection glass holder 70, etc. which were mentioned above are stored. Also, an end on the irradiation head 1 side of the fiber and the collimate lens, which is not illustrated, are contained.

The duct 90 is a double cylindrical member which is provided so as to protrude from an end portion of the housing 80 on the irradiation object O side.

The duct 90 includes an inner cylinder 91, an outer cylinder 92, a dust collector connecting cylinder 93 etc..

The motor holder 60, the protective glass holder 70, and the housing 80 described above are made of a metal such as an aluminum alloy or an engineering plastic etc..

The inner cylinder 91 is formed in a cylindrical shape.

The laser beam R passes through the inner diameter side of the inner cylinder 91 and is emitted to the irradiation object O side.

At an end of the inner cylinder 91 on the side of the housing 80, a small diameter portion 91a is formed in a stepped shape with respect to the other portion.

A purge gas PG is introduced from the inside of the housing 80 into the space A inside the small diameter portion 91a.

At an end portion of the inner cylinder 91 on the irradiation object O side, there is formed a tapered portion 91b which is tapered so as to have a smaller diameter of the irradiation object O side.

The tapered portion 91b has a function of reducing the flow of the purge gas PG and increasing the flow speed while allowing the passage of the laser beam R.

The outer cylinder 92 is a cylindrical member arranged concentrically with the inner cylinder 91 and is provided on an outer diameter side of the inner cylinder 91.

Between the inner peripheral surface of the outer cylinder 92 and the outer peripheral surface of the outer cylinder 91, a continuous gap is formed over the entire circumference.

At an end of the outer cylinder 92 on the side of the housing 80, a small diameter portion 92a formed in a stepped shape with respect to the other portion is formed.

The small diameter portion 92a is fixed in a state of being fitted in an end portion of the housing 80 on the side of the irradiation object O.

An edge of an end 92b of the outer cylinder 92 on the irradiation object O side is formed to be inclined with respect to a rotation center axis of rotation of the rotary cylinder 40, so that an upper side becomes a housing 80 side relative to the lower side, at the time of normal use of irradiation with the rotation center axis of the rotary cylinder 40 being horizontal.

The dust collector connecting tube 93 is a cylindrical tube body which protrudes from the outer cylinder 92 toward the outer diameter side and is connected in a state of communicating with the inner diameter side of the outer cylinder 92.

The dust collector connecting tube 93 is provided below the outer cylinder 92 during the aforementioned normal use.

The dust collector connecting tube 93 is disposed to be inclined with respect to the outer cylinder 92 so as to depart (separate) from the outer cylinder 92 as approaching to the housing 80 side from the irradiation object O side.

The end of another side of the dust collector connection tube 93 is connected to the dust collector 140 (not shown), and vacuum suction is carried out so that an inside may serve as negative pressure.

In the first embodiment, by rotating the rotary cylinder 40 and the wedge prism 20 while emitting the laser beam R, the beam spot BS turns on a circular arc of a predetermined radius along the surface of the irradiation object O.

In this state, by relatively moving the irradiation head 1 parallel along the surface of the irradiation object O, it is possible to perform an excavation process in which the surface of the irradiation object O is scanned by the beam spot BS in a state in which the scanning pattern (circular turn in the 1st embodiment) is moved on the surface at a predetermined feed speed.

In the following, experiments for irradiating the surface of concrete with a laser beam were performed using the above-described laser irradiation apparatus.

The irradiation object O is, for example, a 100 mm × 100 mm × 50 mm concrete block.

First, as for an output of the CW laser oscillator, it is required that the power density that can excavate the surface of the concrete can be continuously generated.

In this respect, it was confirmed that the surface can be excavated if the output is 2 kW or more by a preliminary experiment.

On the other hand, in the vitrifying, since a silicon-based component such as quartz is heated by a laser, vitrifying is more likely to occur than 2 kW, and the following experiments are performed on severer condition by a ytterbium fiber laser having a maximum output of 3 kW and a wavelength of 470 nm.

A turning circle diameter at the focal position of the laser beam R depends on a focal length, the deflection angle of the wedge prism 20 etc., and, for example, is 26 mm. Since a defocus amount described later is adjusted by differentiating the distance between the irradiation head 1 and the irradiation object O (the position of the beam spot BS and the focal length do not necessarily match), the turning circle diameter changes according to the change in the defocus amount.

The diameter of the beam spot BS on the surface of the irradiation object O is adjusted in three stages of 0.43 mm, 0.85 mm, and 1.27 mm, by altering the distance between the irradiation head 1 and the concrete block, which is the irradiation object O.

The feed speed (the speed at which the scanning pattern of the circular turn moves on the surface) when the irradiation head 1 is moved in parallel to the concrete block is arranged in two stages of 22 mm/sec and 11 mm/ sec.

The feed speed is executed by holding a concrete block which is an irradiation object O on an automatic stage having, for example, an X-Y table in this experiment, but the irradiation head 1 may be moved in a state where the concrete block is fixed.

The number of times of irradiation is twice, and after the first irradiation, the second irradiation is performed without delay.

With regard to the number of times of irradiation, since the occurrence of vitrifying by irradiation multiple times has been known as a prior knowledge, it was evaluated whether or not vitrifying occurs in the second irradiation.

The laser beam R is irradiated while the irradiation condition is changed, and, the result of evaluating the degree of vitrifying is shown in Table 1.

The irradiated sample surface was visually observed, and the degree of vitrifying was evaluated in four stages.

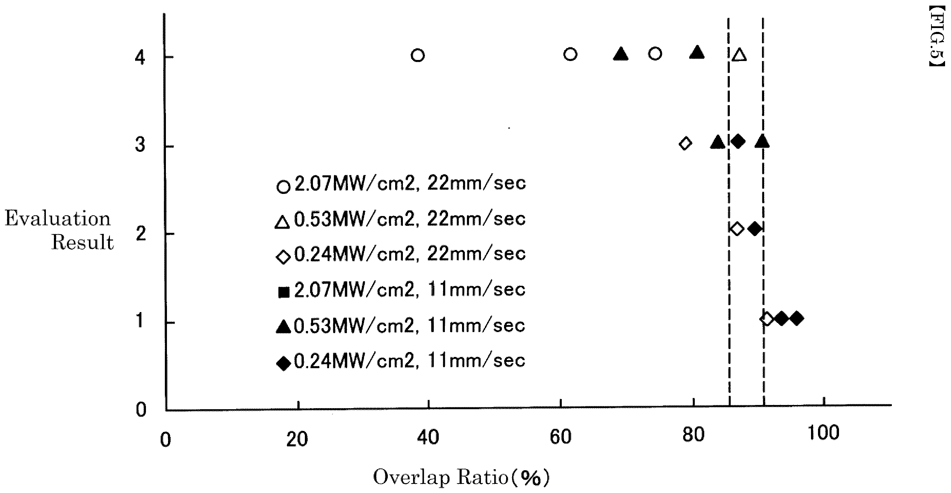

○ (4 in FIG. 5): Almost no vitrifying is observed.

△ (3 in FIG. 5): Partial vitrifying is seen, but not the entire surface.

□ (2 in FIG. 5): Thin vitrifying was observed on most of the surface.

■ (1 in FIG. 5): Serious vitrifying (a foam-like protrusion is generated)

was observed on substantially whole surface.

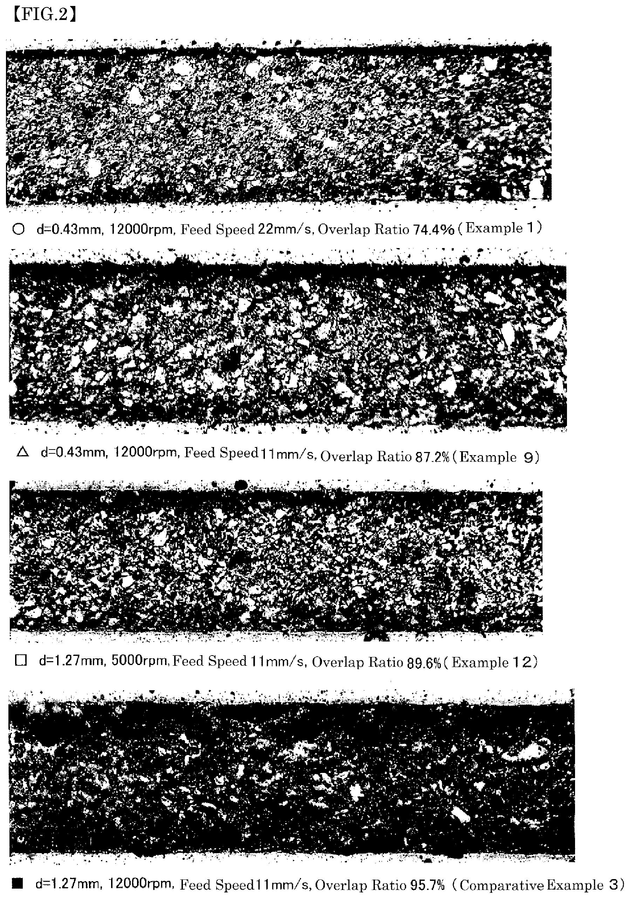

FIG. 2 is a photograph of the surface after irradiation in the first embodiment.

FIG. 2 shows a photograph of the surface representing each stage in the four-stage evaluations, and specifically, FIG. 2 shows Example 1 (○), Example 9 (△), Example 12 (□), and Comparative Example 3 (■).

[Table 1]

| | Irradiation Conditon | | | | | | | Result |
| --- | --- | --- | --- | --- | --- | --- | --- | --- |
| | Revolution | Turn Circle Diameter | Spot Diameter | Scan Speed | Power Density | Irradiation Time | Overlap Ratio | Evalution |
| | rpm | mm | mm | mm/sec | MW/cm2 | msec | % | Mark |
| Example 1 | 12000 | 26 | 0.43 | 22 | 2.07 | 0.03 | 74.4 | ○ |
| Example 2 | 12000 | 25 | 0.85 | 22 | 0.53 | 0.05 | 87.1 | ○ |
| Comparative Example 1 | 12000 | 23 | 1.27 | 22 | 0. 24 | 0.09 | 91.3 | ■ |
| Example 3 | 5000 | 26 | 0.43 | 22 | 2.07 | 0. 06 | 38.6 | ○ |
| Example 4 | 5000 | 25 | 0.85 | 22 | 0.53 | 0.13 | 68.9 | ○ |
| Example 5 | 5000 | 23 | 1. 27 | 22 | 0.24 | 0.21 | 79.2 | △ |
| Example 6 | 8000 | 26 | 0.43 | 22 | 2.07 | 0.04 | 61.6 | ○ |
| Example 7 | 8000 | 25 | 0.85 | 22 | 0.53 | 0.08 | 80.6 | ○ |
| Example 8 | 8000 | 23 | 1.27 | 22 | 0.24 | 0.13 | 87.0 | □ |
| Example 9 | 12000 | 26 | 0.43 | 11 | 2.07 | 0.03 | 87.2 | △ |
| Comparative Example 2 | 12000 | 25 | 0.85 | 11 | 0.53 | 0.05 | 93.5 | ■ |
| Comparative Example 3 | 12000 | 23 | 1.27 | 11 | 0.24 | 0.09 | 95.7 | ■ |
| Example 10 | 5000 | 26 | 0.43 | 11 | 2.07 | 0.06 | 69.3 | ○ |
| Example 11 | 5000 | 25 | 0.85 | 11 | 0.53 | 0.13 | 84.5 | △ |
| Example 12 | 5000 | 23 | 1.27 | 11 | 0.24 | 0.21 | 89.6 | □ |
| Example 13 | 8000 | 26 | 0.43 | 11 | 2.07 | 0.04 | 80.8 | ○ |
| Comparative Example 4 | 8000 | 25 | 0.85 | 11 | 0. 53 | 0.08 | 90.3 | △ |
| Comparative Example 5 | 8000 | 23 | 1.27 | 11 | 0.24 | 0.13 | 93. 5 | ■ |

The concept of the overlap ratio and the irradiation time shown in Table 1 will be explained below.

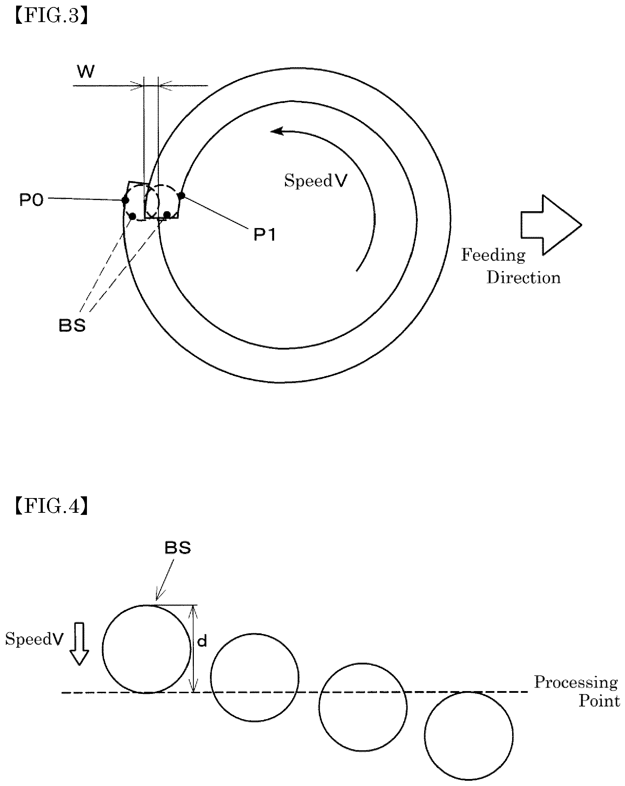

FIG. 3 is a diagram illustrating an example of tracks (passage, path) of the beam spot BS in the first embodiment.

As shown in FIG. 3, the beam spot BS rotates in accordance with the rotation of the wedge prism 20 and moves in the feeding direction of the irradiation head 1 with regard to the irradiation object O.

As a result, when the wedge prism 20 rotates one round (360°), the offset is generated between the path P 0 (the tracks of the beam spot) that has been previously irradiated and the path P 1 that is irradiated this time.

Therefore, in the present specification, the claims, etc., the overlap ratio is defined as (w/d× 100 (%)), that is a ratio of the width to the diameter d of the beam spot BS, where the width w is an overlap of the path P 0 irradiated immediately before and the latest path P 1.

The overlap ratio is a value indicating a ratio in which the passage path (path) of the beam spot BS overlaps the passage path of the beam spot BS in the immediately preceding irradiation, when the beam spot BS repeatedly passes a predetermined portion in the scanning pattern.

Here, in a case where the scanning pattern is circular as in the present embodiment, the width W can also be defined as the scanning amount (the feeding amount of the irradiation head) during a period during which the wedge prism 20 rotates 360° (during one cycle).

That is, the overlap ratio can be defined as the ratio of the diameter of the beam spot to the feed speed of the scanning pattern in one cycle of the scanning pattern, and for example, in the left and right regions of the circular turning tracks in FIG. 3, the overlap ratio according to this definition substantially coincides with the overlap ratio according to the above-described definition.

FIG. 4 is a schematic diagram showing the concept of the irradiation time in the embodiment

As shown in FIG. 4, time when an arbitrary point (processing point) set on the course of the beam spot BS is the irradiation time. When the diameter of the beam spot BS is d, and the moving speed of the beam spot BS on the irradiation surface is V, the irradiation time may be defined as d/V (sec).

As a result of the above experiment, it is considered that an overlap ratio is important as a dominant factor for determining the presence or absence of occurrence of vitrifying in a condition range in which surface excavation occurs by using a laser having a wavelength of, for example, 1 μm.

FIG. 5 is a diagram showing the correlation between the overlap ratio and the result of the vitrifying evaluation

In FIG. 5, the horizontal axis indicates the overlap ratio, and the vertical axis indicates an evaluation result (better as the number is larger, each of 4,3,2,1 represents ○△□■ in Table 1.

As shown in FIG. 5, it has been found that even at any power density and scanning speed, it has been found that the degree of vitrifying increases when the overlap ratio becomes high, and particularly when it exceeds 90%.

From this, it is necessary to set the overlap ratio to 90% or less. Also, if it is 85% or less, it can be seen that vitrifying can be effectively suppressed over substantially the entire surface of the processing surface and that it is more preferable.

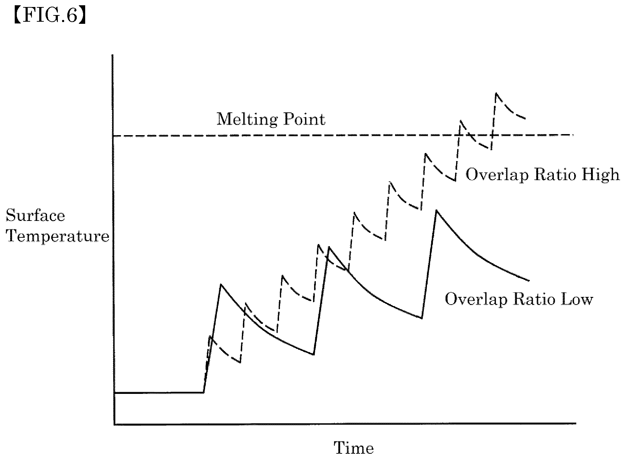

FIG. 6 is a diagram schematically showing a difference in surface temperature history due to overlap ratio.

In FIG. 6, the horizontal axis indicates time, and the vertical axis indicates a temperature of one point on the surface of the concrete.

Solid lines schematically indicate states for relatively low overlap ratio and broken lines for relatively high overlap ratio.

In the case where the overlap ratio is altered by making the amount of energy given from the laser constant in one process, the high overlap ratio means that the laser beam R is irradiated in divided many times during the scanning.

In order to excavate the surface of concrete, it is necessary to apply high energy to the surface layer of concrete in a short time, however, when the overlap ratio is high, energy applied by one scanning (circular turning) is low, so that energy is not efficiently used for excavation, and surplus energy that does not contribute to excavation is consumed for heating the surface.

Therefore, the temperature of the surface rises up, and the melting point of the Si-based component contained in the concrete such as quartz exceeds the melting point of the Si-based component.

On the other hand, when the overlap ratio is lowered, the number of times of the laser beam R being irradiated during the scanning is reduced, and the temperature rise is suppressed by increasing the efficiency of the excavation, and the vitrifying can be suppressed.

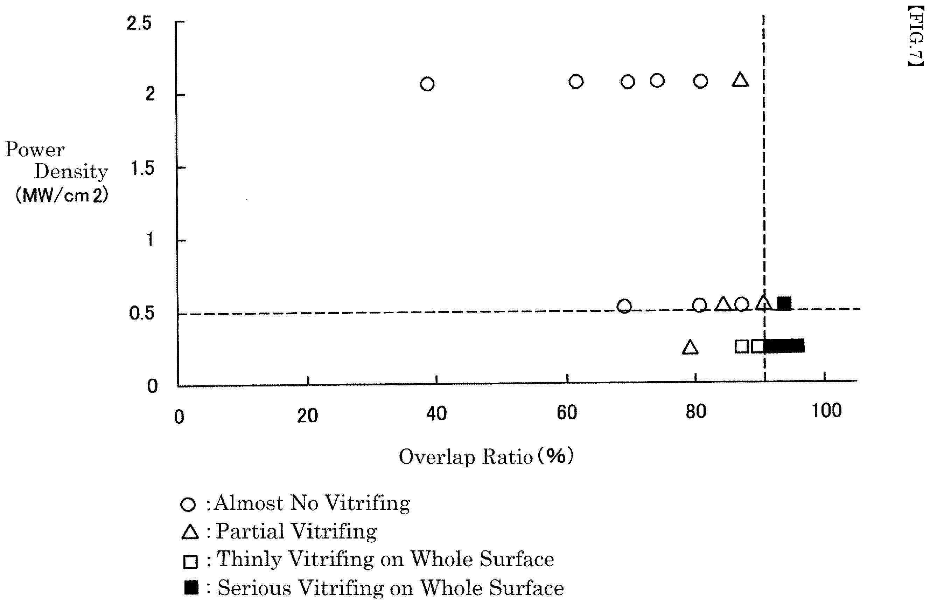

FIG. 7 is a diagram showing relation between overlap ratio and power density, and evaluation result of vitrifying.

The horizontal axis represents overlap ratio, and the vertical axis represents power density (irradiation energy per unit irradiation area).

As shown in FIG. 7, vitrifying can be suppressed when the power density is higher, for example, if no less than 0.53 MW/cm$^2$ and as long as the overlap ratio does not exceed 90%, it can be understood that vitrifying can be suppressed to a sufficient degree.

Further, it has been found that vitrifying can be effectively suppressed when moving speed of the beam spot on the surface is 6 meters per second or higher.

Next, a laser-processed concrete surface according to the present embodiment will be described.

By performing the surface processing method of the concrete according to the first embodiment, an excavation trace having a width equivalent to the beam spot diameter D is formed at a place where the beam spot BS passes.

This excavation trace is positioned, for example, at the same position of an angular position of the wedge prism with respect to the irradiation head 1, and overlapping over a range of 90% or less of the diameter of the beam spot BS in the feeding direction of the circular scanning pattern (the left-right direction in FIG. 3).

In such a laser-processed concrete surface, and an area in which silicon is re-solidified after melting and vitrifying is generated by laser irradiation is 50% or less.

In the present embodiment, the width of the excavation trace corresponds to the diameter D of the beam spot BS.

Assuming the output P (W) of the laser oscillator and the spot diameter d (cm),

$$\mathrm{d\ (cm)} \leqq 1.55 \times 10^{-3} \times \sqrt{P}.$$

For example, if an output is about 3 kW which the operator can hold and handle the irradiation head 1, the width of the excavation trace is 0.85 mm or less.

In addition, a depth (gap between a projecting end portion of a convex portion and a bottom portion of a groove portion in a surface shape) of the excavation trace is, for example, 1 mm or less, which is characteristically smaller than the unevenness of the surface by the existing water jet method.

According to the first embodiment described above, the following effects can be obtained.

(1) By irradiating the surface of a concrete block with laser beam R while feeding a scanning pattern in which the beam spot BS turns on the surface of the concrete block so an overlap ratio to become 90% or less, the occurrence of vitrifying can be suppressed and a good processed surface can be obtained even when high-speed processing is performed using the continuous wave (CW) laser.

(2) Since the beam spot moves at a speed of 6 meters per second or faster on the surface of the concrete block, the beam spot is immediately cooled after receiving heat input, so that it is possible to prevent the occurrence of vitrifying by suppressing a rise of the surface temperature.

(3) Since the power density of the beam spot BS is 0.53 MW/cm$^2$ or higher the amount of heat required for roughening of the concrete surface can be applied in a short period of time by a high power density, and the rise of the surface temperature can be suppressed, and the occurrence of vitrifying can be prevented.

(4) Since the surface of the concrete is irradiated by a laser light having a power density of 0.53 MW/cm$^2$ or higher, one irradiation time is 0.12 msec or less, and each time is separated by an predetermined interval, the rise of the surface temperature can be suppressed while the surface of the concrete is crushed, and the vitrifying can be prevented.

(5) Since the number of times of irradiation of the repeated irradiation at the same position on the surface is 10 times or less, the occurrence of vitrifying due to repeated irradiation with an excessively large number of times can be prevented.

(6) By using a high output of 3 kW as the laser oscillator, it is possible to appropriately form a beam spot having an energy density sufficient to peel off the concrete surface, and to certainly obtain the above-described effect.

(7) By providing the wedge prism 20 rotating in the optical system for emitting the laser beam as the deflection means, it is possible to form a scanning pattern in which the beam spot BS turns into a circle with a simple configuration.

< Second Embodiment>

Next, a second embodiment of surface processing method of concrete to which the present invention is applied and a laser-processed concrete surface will be described

In each of embodiments described below, explanation on a portion common to the previous embodiment will be omitted, and differences will be mainly explained.

In the second embodiment, instead of a circular scanning pattern using a turning wedge prism in the first embodiment, for example, by a galvanometer-scanner having a galvanomirror that swings around a predetermined axis, a scanning pattern is formed that reciprocates linearly.

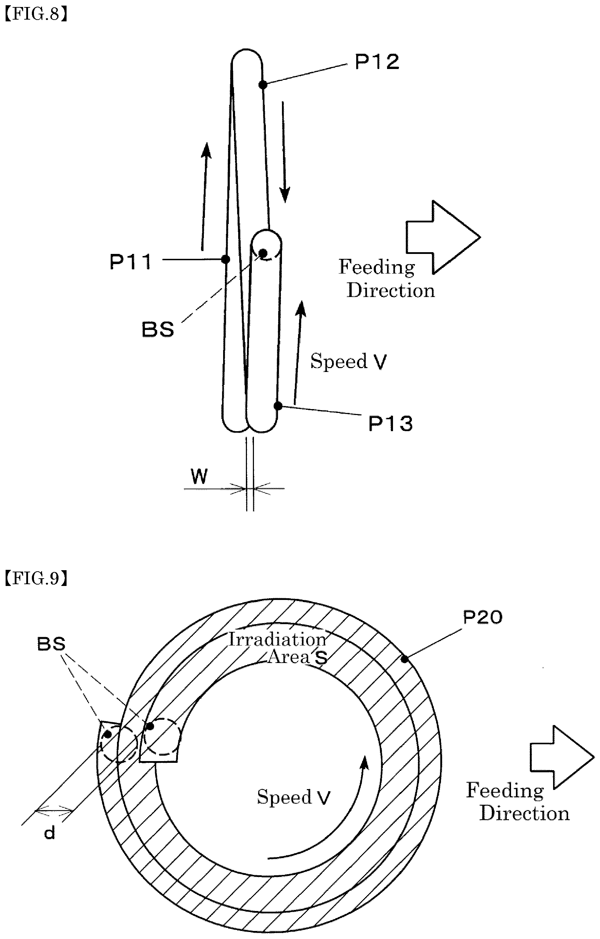

FIG. 8 is a diagram illustrating an example of a tracks of a beam spot in the second embodiment

In the second embodiment, the path through which the beam spot BS passes advances in a zigzag manner.

For example, the beam spot BS sequentially advances the paths P 11, P 12, and P 13 at a speed V.

Also in the second embodiment described above, the same effects as those of the above-described first embodiment can be obtained.

<Third Embodiment >

Next, a third embodiment of a surface processing method of concrete to which the present invention is applied and a laser-processed concrete surface will be described.

In the third embodiment, the scanning pattern is set in a spiral shape in which the diameter changes according to the circular turning of the path P 20.

FIG. 9 is a diagram illustrating an example of a tracks of a beam spot in the third embodiment.

Such a scanning pattern can be realized by, for example, constituting to allow a beam to sequentially pass through a plurality of wedge prisms and relatively rotating each wedge prism around a rotation center axis, or the like.

In the case of such a helical scanning pattern, as the definition of the overlap ratio, it is difficult to apply the one of the first embodiment. Although, when the average moving speed of the beam spot BS on the surface of the irradiation object is V (mm/sec), the diameter of the beam spot BS is d (mm), and the irradiation area S (mm$^2$) (hatched range in FIG. 9) at a predetermined irradiation time t arbitrarily set (for example, 1 second), the overlap ratio may be defined as

$$(1- (S / (V \times d \times t))) \times 100 \, (\%).$$

Such definitions are useful in the case where the application of the definition of the overlap ratio described in the first embodiment is difficult due to, for example, the shape of the scanning pattern.

This assumes that a decreased actual irradiation area S is deemed as an overlap ratio with respect to the theoretical maximum irradiation area V $\times$ d in which the beam spot BS does not overlap.

However, in this case, in a case where the same place is repeatedly irradiated many times again, the overlap ratio is increased comparing to other definitions, so that the above-described unit time should be set so as not to become excessively long.

Also in the third embodiment described above, the same effects as each of the above-described embodiments can be obtained.

(MODIFIED EXAMPLE)

The present invention is not limited to the embodiments described above, and various modifications and changes may be made, and they are within the technical scope of the present invention.

(1) A surface processing method of concrete and a configuration of a laser-processed concrete surface are not limited to the above-described embodiments. This can be changed as appropriate.

For example, the shape, structure, material, manufacturing method, arrangement, number etc. of each member constituting the laser irradiation device can be appropriately changed.

In addition, in the laser type, a fiber laser, a YAG laser or the like can be appropriately selected.

(2) In each embodiment, the scanning pattern is set in a circular, straight, reciprocating, or spiral shape as an example, but the scanning pattern can be appropriately changed without being limited thereto.

Also, the method of forming the scanning pattern is not limited to the turning wedge prism and the galvanometer scanner.

By using a polygon mirror for example, a configuration may be adopted in which the beam spot is repeatedly moved straight in one direction.

Further, for example, using a two-axis galvanometer scanner, a scanning pattern may be formed into a polygonal shape or another shape.

The scanning pattern may be various curves such as a hypocycloid, an epicycloid, a hypotrochoid, and an epitrochoid.

DESCRIPTION OF REFERENCE CODE

| | | | |
|---|---|---|---|
| 1 | irradiation head | 10 | focus lens |
| 20 | wedge prism | 30 | protective glass |
| 40 | rotary cylinder | 50 | motor |
| 60 | motor holder | 61 | purge gas channel |
| 70 | protective glass holder | 80 | housing |
| 90 | duct | 91 | inner cylinder |
| 91a | small diameter portion | 91b | tapered portion |

| 92 | outer cylinder | 92a | small diameter portion | | |
| 92b | end | 93 | dust collecting device connecting tube | | |
| BS | beam spot | P | beam spot path | A | space |

**Claims**

1. A surface processing method of concrete, wherein a surface of the concrete is irradiated with a laser beam so that a beam spot is scanned along a predetermined scanning pattern and the scanning pattern moves along the surface at a predetermined feed speed,
and **characterized in that**, when the beam spot repeatedly passes through a predetermined portion in the scanning pattern, an overlap ratio, which is a ratio of overlapping of a passage path of the beam spot over a passage path of the beam spot in an immediately preceding irradiation, is 90% or less.

2. The surface processing method of concrete according to Claim 1, wherein the beam spot moves on the surface along a predetermined path having a width corresponding to a diameter of the beam spot,
and the overlap ratio is a ratio of an overlapping width of the beam spot irradiated in an immediately preceding path and a latest path to the diameter of the beam spot.

3. The surface processing method of concrete according to Claim 1, wherein the overlap ratio is a ratio of a diameter of the beam spot to a feed length in one cycle of the scanning pattern according to the feed speed of the scanning pattern.

4. The surface processing method of concrete according to Claim 1, wherein, when a moving speed of the beam spot on the surface is V, the diameter of the beam spot is d, and the irradiation area during an irradiation time t is S, the overlap ratio is $(1 -(S/ (V \times d \times t)) \times 100$ (%).

5. The surface processing method of concrete according to one of Claims 1 to 4, wherein the beam spot moves on the surface at a speed of 6 meters per second or faster.

6. The surface processing method of concrete according to one of Claims 1 to 5, wherein a power density of the beam spot on the surface is no less than 0.53 MW/cm$^2$.

7. A surface processing method of concrete, wherein a surface of a concrete is repeatedly irradiated with a laser beam having a power density of no less than 0.53 MW/cm$^2$, with single irradiation time 0.12 msec or less, and with a separated predetermined interval.

8. The surface processing method of concrete according to Claim 7, wherein a number of times of irradiation of the repeated irradiation at a same position on the surface is 10 or less.

9. The surface processing method of concrete according to one of Claims 1 to 8, wherein an output of a laser oscillator for generating the laser beam is 2 kW or higher.

10. The surface processing method of concrete according to one of Claims 1 to 9, wherein a scanning pattern is set such that the beam spot turns along a predetermined shape on the surface.

11. The surface processing method of concrete according to one of Claims 1 to 9, wherein a scanning pattern is set such that the beam spot reciprocates in a predetermined interval on the surface.

12. A laser processed-concrete surface irradiated with a laser beam so that a beam spot is scanned along a predetermined scanning pattern on a surface of concrete and the scanning pattern moves along the surface at a predetermined feed speed,
and in at least a part of area, an excavation trace formed when the beam spot repeatedly passes through a predetermined portion in the scanning pattern, is disposed so as to be overlapped with another excavation trace formed immediately before, in a range of 90% or less of the diameter of the beam spot in the feed speed direction of the scanning pattern.

13. A laser processed-concrete surface according to Claim 12, wherein a surface area in which re-solidification after melting and vitrifying generated by laser irradiation is 50% or less.

14. A laser processed-concrete surface according to Claim 12 or 13, wherein the width of the excavation trace is 0.85 mm or less, and the depth of the excavation trace is 1 mm or less

【FIG.1】

【FIG.2】

O  d=0.43mm, 12000rpm, Feed Speed 22mm/s, Overlap Ratio 74.4% (Example 1)

△  d=0.43mm, 12000rpm, Feed Speed 11mm/s, Overlap Ratio 87.2% (Example 9)

□  d=1.27mm, 5000rpm, Feed Speed 11mm/s, Overlap Ratio 89.6% (Example 12)

■  d=1.27mm, 12000rpm, Feed Speed 11mm/s, Overlap Ratio 95.7% (Comparative Example 3)

【FIG.3】

【FIG.4】

[FIG.5]

EP 4 129 561 A1

【FIG.6】

[FIG.7]

EP 4 129 561 A1

○ : Almost No Vitrifing

△ : Partial Vitrifing

□ : Thinly Vitrifing on Whole Surface

■ : Serious Vitrifing on Whole Surface

【FIG.8】

P12

P11

BS

Feeding
Direction

Speed V

P13

W

【FIG.9】

BS

P20

Irradiation
Area S

Speed V

Feeding
Direction

d

<table>
<tr><td colspan="2" align="center">**INTERNATIONAL SEARCH REPORT**</td><td colspan="2">International application No.<br>PCT/JP2021/012889</td></tr>
</table>

A. CLASSIFICATION OF SUBJECT MATTER
Int. Cl. B23K26/36(2014.01)i, B23K26/082(2014.01)i
FI: B23K26/36, B23K26/082

According to International Patent Classification (IPC) or to both national classification and IPC

B. FIELDS SEARCHED

Minimum documentation searched (classification system followed by classification symbols)
Int. Cl. B23K26/36, B23K26/082

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2017-077586 A (TOYOKOH CO., LTD.) 27 April | 1-11 |
| A | 2017, paragraphs [0033], [0049]-[0108], fig. 1-4 | 12-14 |
| A | JP 11-270153 A (TAISEI CORP.) 05 October 1999, paragraphs [0021]-[0026], fig. 1, 2 | 1-14 |

☐ Further documents are listed in the continuation of Box C.   ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>11.05.2021 | Date of mailing of the international search report<br>25.05.2021 |
|---|---|
| Name and mailing address of the ISA/<br>　　Japan Patent Office<br>　　3-4-3, Kasumigaseki, Chiyoda-ku,<br>　　Tokyo 100-8915, Japan | Authorized officer<br><br>Telephone No. |

Form PCT/ISA/210 (second sheet) (January 2015)

INTERNATIONAL SEARCH REPORT
Information on patent family members

International application No.

PCT/JP2021/012889

| Patent Documents referred to in the Report | Publication Date | Patent Family | Publication Date |
|---|---|---|---|
| JP 2017-077586 A | 27.04.2017 | US 2015/0076125 A1 paragraphs [0053], [0069]-[0127], fig. 1-4 EP 2823929 A1 | |
| JP 11-270153 A | 05.10.1999 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002089033 A

**Non-patent literature cited in the description**

- **NGUYEN PHI LONG ; HIROYUKI DAIDO ; TO-MONORI YAMADA ; AKIHIKO NISHIMURA ; NOBORU HASEGAWA ; TETSUYA KAWACHI.** *JOURNAL OF LASER APPLICATIONS VOLUME,* November 2017, vol. 29 (4

- **MICHAEL SAVINA ; ZHIYUE XU ; YONG WANG ; CLAUDE REED ; MICHAEL PELLIN.** *Journal of Laser Applications,* 2000, vol. 12 (200), 200-204